# EUROPÄISCHE PATENTANMELDUNG

(11) **EP 1 361 770 A1**
(43) Veröffentlichungstag der Anmeldung: **12.11.2003**
(21) Anmeldenummer: 02010087.1
(22) Anmeldetag: 06.05.2002
(51) Int. Cl.: H04Q 7/38

(54) **Verfahren und Funkkommunikationssystem zur Übertragung von Nutzinformationen als Dienst an mehrere Teilnehmerstationen**

(71) Anmelder: SIEMENS AKTIENGESELLSCHAFT, 80333 München (DE)
(72) Erfinder: Breuer, Volker, 16321 Bernau (DE); Kroth, Norbert, 14471 Potsdam (DE); Purat, Marcus Dr., 12209 Berlin (DE); Randall,Dave, Romsey, Hampshire S051 5SZ (GB)

(57) **Zusammenfassung**

Die Erfindung betrifft eine Verfahren und ein Funkkommunikationssystem zur Übertragung von Nutzinformationen als Dienst an mehrere Teilnehmerstationen in einem Funkkommunikationssystem mit mindestens einer Basisstation (NodeB1, NodeB2) und Teilnehmerstationen (UE1 ... UE6), welche über eine Funkkommunikations-Schnittstelle miteinander verbunden sind. Erfindungsgemäß signalisiert die Basisstation (NodeB1, NodeB2) über einen Gruppenkontrollkanal (GCH1, GCH2) an die den mindestens einen Dienst nutzenden Teilnehmerstationen (UE1 ... UE6) Funkressourceninformation zu mindestens einem Verkehrskanal (TCH1, TCH2a, TCH2b, TCH2c), über welchen die Nutzinformationen des mindestens einen Dienstes an die Teilnehmerstationen übertragen werden.

## Beschreibung

Die Erfindung betrifft ein Verfahren zur Übertragung von von Nutzinformationen in einem Funkkommunikationssystem mit mindestens einer Funknetzwerkkontrolleinrichtung, mindestens einer Basisstation und mindestens einer Teilnehmerstation nach dem Oberbegriff des Anspruchs 1.

Die Erfindung betrifft ferner ein Funkkommunikationssystem nach dem Oberbegriff des Anspruchs 12.

Kommunikationssysteme gewinnen zunehmend an Bedeutung im wirtschaftlichen, aber auch im privaten Bereich. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. So werden Geräte entwickelt, die unterschiedliche Systeme nutzen können (Multi Homing).

Den Funkkommunikationssystemen kommt dabei aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen der mindestens einen Basisstation und der mindestens einen Teilnehmerstation erfolgt über eine Funkkommunikations-Schnittstelle. Die Basisstation kann dabei mehrere Funkzellen bedienen.

Üblicherweise sind die mindestens eine Basisstation und eine Funknetzwerkkontrolleinrichtung (RNC Radio Network Controler) Bestandteile eines Basisstationssubsystems (RNS Radio Network Subsystem). Ein Funkkommunikationssystem umfasst in der Regel mehrere Basisstationssubsysteme, die an ein Kernnetz (CN Core Network) angeschlossen sind. Dabei ist die Funknetzwerkkontrolleinrichtung des Basisstationssubsystems mit einer Zugangseinrichtung (SGSN Serving GPRS Support Node) des Kernnetzes verbunden.

Neben individuellen Nutzinformationen werden in Funkkommunikationssystemen Daten übertragen, die mehreren Benutzern zur Verfügung gestellt werden. Beispielsweise umfassen solche Nutzinformationen Video streams oder andere Broadcast- und/oder Multicast-Informationen. Die Dienste zur Übertragung von Nutzinformationen, welche nicht nur individuell für einen einzigen Teilnehmer vorgesehen sind, sondern mehreren Teilnehmern zur Verfügung gestellt werden, werden unter dem Begriff MBMS (Multimedia Broadcast/Multicast Service) zusammengefasst.

Dienste zur Übertragung von Broadcast- und Multicast-Informationen können unterschiedliche Datenraten in Anspruch nehmen.

In gegenwärtigen mobilen Funknetzwerken (z.B. UTRAN) kann nur ein Broadcast-Dienst mit einer maximalen Datenrate (z.B. 32 kbps) bereitgestellt werden, der über einen Kanal des Funknetzwerks übertragen wird. Das Multiplexen des Dienstes erfolgt im Kernnetz (z.B. CBC Common Broadcast Channel) auf der Basis von Nachrichtentyp-Identifizierern. Die Funkressource, die für den Broadcast-Dienst genutzt wird, ist dabei der Teilnehmerstation bekannt durch das Lesen der Systeminformation, die in der ganzen Funkzelle allen Teilnehmerstationen als Broadcastinformation übermittelt wird.

Es werden nunmehr neue Anforderungen an die Netzwerke gestellt, die vor allem hohe Datenraten (> 64 kbps) und eine Ermöglichung einer dynamischen Zuweisung der Funknetzressourcen an einzelne Broadcast und/oder Multicast-Dienste gewährleisten können. Es sollten auch parallel unterschiedliche Multimediadienste (Text, Audio, Video, usw.) zu den Teilnehmern in Einpunkt-zu-Mehrpunkt-Verbindungen übertragen werden. Die unterschiedlichen MBMS-Dienste (Multimedia Broadcast/Multicast Service) werden vom Kernnetz als separarte Datenströme bereitgestellt. Es wird erwartet, dass das Funknetzwerk die Daten auf einem oder auf mehrere Funkkanäle multiplext. Dabei können grundsätzlich alle Vielfachzugriffsverfahren einzeln oder in Kombination Anwendung finden.

Der Erfindung liegt daher die Aufgabe zu Grunde, ein Verfahren und ein Funkkommunikationssystem der eingangs genannten Art aufzuzeigen, welche diese Vorgaben einzeln oder insgesamt erfüllen.

Die Aufgabe wird für das Verfahren mit den Merkmalen des Anspruchs 1 und für die Funkkommunikation mit den Merkmalen des Anspruchs 12 gelöst.

Vorteilhafte Ausgestaltung und Weiterbildungen sind Gegenstand der abhängigen Ansprüche.

Erfindungsgemäß signalisiert die Basisstation über einen Gruppenkontrollkanal an die den mindestens einen Dienst nutzenden Teilnehmerstationen Funkressourceninformation zu mindestens einem Verkehrskanal, über welchen die Nutzinformationen des mindestens einen Dienstes an die Teilnehmerstationen übertragen werden.

Durch die Übertragung der Signalisierungsinformation zu den MBMS-Diensten auf dem Gruppenkontrollkanal und der Übertragung der eigentlichen Nutzinformation auf Verkehrskanälen kann eine außerordentlich große Dynamik im Hinblick auf die Funkressourcenverwaltung gewährleistet werden. Damit können unter anderem auch die unterschiedlichen spezifischen Dienstgüteanforderungen (QoS Quality of Service) der einzelnen MBMS-Dienste ohne größere Schwierigkeiten berücksichtigt und sichergestellt werden.

Die für den Gruppenkontrollkanal benutzten Ressourcen müssen potentiell allen Teilnehmerstationen der Funkzelle bekannt sein. Diese Information kann zum Beispiel als Teil der Systeminformation über Broadcast-Kanäle zur Verfügung gestellt werden. Der Gruppenkontrollkanal kann beispielsweise als MBMS Group Control Channel bezeichnet werden. Als Gruppenkontrollkanal kann prinzipiell jeder gemeinsame Kanal einer Funkzelle eingestzt werden.

In dem Gruppenkontrollkanal kann Information zu lediglich einem Dienst oder aber auch bevorzugt zu unterschiedlichen Diensten, die in einer Funkzelle empfangen werden können, übermittelt werden. Zumnindest alle Teilnehmerstationen, die einen aktiv einen Broadcast- oder Multicast-Dienst in Anspruch nehmen, erhalten die notwendigen Informationen über den Gruppenkontrollkanal.

Die erfindungsgemäß über den Gruppenkontrollkanal signalisierte Funkressourceninformation zu dem mindestens einem Verkehrskanal kann im einzelnen unterschiedliche Informationen umfassen. Auf jeden Fall muss Information zu einem Verkehrskanal (dies kann betreffen z.B. die Channel ID, den Channelization Code, den Spreizfaktor oder dergleichen) oder zu mehrenen Verkehrskanälen den Teilnehmerstationen übermittelt werden.

Die Basisstation kann Information, welche die Identifikation des mindestens einen Dienstes (MBMS Service ID) betrifft, über den Gruppenkontrollkanal übermitteln.

Die Basisstation kann auch Information, welche die Startzeit der Übertragung des mindestens einen Dienstes in dem mindestens einen Verkehrskanal betrifft, über den Gruppenkontrollkanal übertragen.

Ferner kann die Basisstation Information, welche die Übertragungsdauer des Dienstes in dem mindestens einen Verkehrskanal betrifft, über den Gruppenkontrollkanal signalisieren.

Die Basisstation kann Information, welche die Periodizität der Übertragung des Dienstes in dem mindestens einen Verkehrskanal betrifft, über den Gruppenkontrollkanal übermitteln.

Grundsätzlich kann die Basisstation kontinuierlich Information über den Gruppenkontrollkanal übermitteln. Damit ist auch umfasst, dass für den Fall des zeitlichen Vielfachzugriffsverfahrens (zeit-Multiplexen) in aufeinanderfolgenden Funkrahmen übertragen wird.

Besondere Vorteile ergeben sich jedoch, wenn die Basisstation nur zeitweise Information über den Gruppenkontrollkanal übermittelt. Dann kann dieser Kanal auch für andere Informationen genutrzt werden, da in der Regel eine vollständige Belegung der Kanalressource des Gruppenkontrollkanals für die Signalisierung der erfindungsgemäßen MBMS-Information nicht gebraucht wird. Durch diese Masnahme kann die dynamische Funkressourcenverwaltung zusätzlich unterstützt werden.

Im Falle, dass die Basisstation nur zeitweise Information über den Gruppenkontrollkanal überträgt, ist es besonders sinnvoll, dass die Basisstation Information, welche den Zeitpunkt der nächsten Übertragung zu mindestens einem Dienst im Gruppenkontrollkanal betrifft, über den Gruppenkontrollkanal übermittelt. Damit wissen die aktiv an einem MBMS-Dienst beteiligten Teilnehmerstationen, wann MBMS-Dienst bzw. MBMS-Dienste bezogene Signalisierungsinformation in der Funkzelle übertragen wird.

In Ausgestaltung der Erfindung werden die über den Gruppenkontrollkanal übermittelten Informationen in einem Ressourcen-Zuweisungs-Schema (Resource Allocation Scheme) innerhalb eines Funkrahmens übertragen. Ein Ressourcen-Zuweisungs-Schema kann beispielsweise umfassen:
- MBMS Service ID, Channel ID,
- Channelization Code, Spreading Factor,
- Start Time, Duration, Periodicity,
- ...
- Time instance of the transmission of the next resource allocation scheme.

Ein Ressourcen-Zuweisungs-Schema kann auch innerhalb eines expliziten Signalisierungsnachricht auf dem Gruppenkontrollkanal übertragen werden. Ein neues Ressourcen-Zuweisungs-Schema kann entweder eine vollständig neue Konfiguration signalisieren. Es können aber auch in einer bestehenden Konfiguration Änderungen zu einem oder mehreren spezifischen MBMS-Diensten oder sogar ein bereits gesendetes Ressourcen-Zuweisungs-Schema erneut übermittelt werden.

In Weiterbildung der Erfindung können verschiedene Dienste auf separate Verkehrskanäle abgebildet werden. Es ist aber auch möglich, dass verschiedene Dienste auf einem Verkehrskanal oder auf mehreren Verkehrskanälen zeitlich gemultiplext werden. Schließlich können diese beiden genannten Möglichkeiten auch kombiniert werden.

Beim erfindungsemäßen Funkkommunikationssystem sind Mittel vorhanden, um von der Basisstation über einen Gruppenkontrollkanal an die den mindestens einen Dienst nutzenden Teilnehmerstationen Funkressourceninformation zu mindestens einem Verkehrskanal zu signalisieren, über welchen die Nutzinformationen des mindestens einen Dienstes an die Teilnehmerstationen übertragen werden.

Nachfolgend soll die Erfindung anhand zweier Figuren näher erläutert werden.

Hierbei zeigen:
- Fig. 1:: eine schematische Darstellung der erfindungsgemäßen Übertragung im Gruppenkontrollkanal und auf mehreren Verkehrskanälen,
- Fig. 2:: eine schematische Darstellung der erfindungsgemäßen Übertragung zwischen einer Funknetzwerkkontrolleinrichtung, Basisstionen und Teilnehmerstationen.

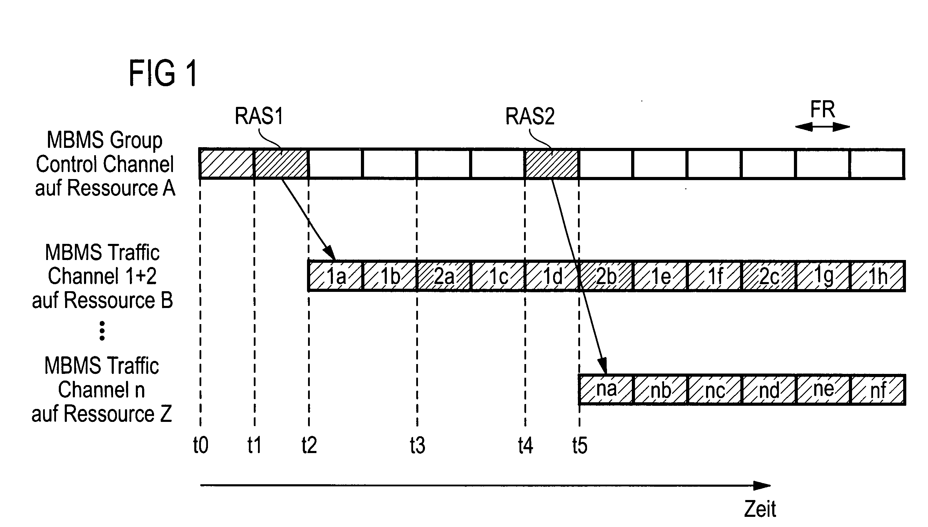

In Fig. 1 sind im oberen Teil der Darstellung eine beispielhafte Übertragung innerhalb des Gruppenkontrollkanals (MBMS Group Control Channel) auf einer Funkressource A irgendeines nichtzeitlichen Vielfachzugriffs (z.B. Frequenz, Codes) über der Zeit gezeigt. Zu den Zeitpunkten t1 und t4 werden jeweils in einem Funkrahmen der Länge FR Ressourcen-Zuweisungs-Schemata RAS1 und RAS2 (Resource Allocation Scheme) übermittelt.

Im ersten Ressourcen-Zuweisungs-Schema RAS1 wird angegeben, dass der Verkehrskanal 1 (MBMS Taffic Channel 1) auf einer zweiten Funkressource B einen MBMS-Dienst 1 trägt, welcher zum Zeitpunkt t2 startet, eine Dauer von zwei Funkrahmen (1a,1b; lc, 1d; le, 1f; 1g, 1h) der Länge FR und eine Periodizität von einem Funkrahmen aufweist. Verkehrskanal 2 (MBMS Taffic Channel 2) auf der zweiten Funkressource B trägt gemäß der Signalisierung im Ressourcen-Zuweisungs-Schema RAS1 außerdem einen MBMS-Dienst 2, welcher zum Zeitpunkt t3 startet, eine Dauer von einem Funkrahmen (2a; 2b; 2c) der Länge FR und eine Periodizität von zwei Funkrahmen aufweist.

Im zweiten Ressourcen-Zuweisungs-Schema RAS2 wird signalisiert, dass der Verkehrskanal n (MBMS Taffic Channel n) auf einer zweiten Funkressource Z einen MBMS-Dienst n trägt, welcher zum Zeitpunkt t5 startet. MBMS-Dienst n weist eine Dauer von einem Funkrahmen (na; nb; nc; nd; ne; nf) der Länge FR und eine Periodizität von einem Funkrahmen auf.

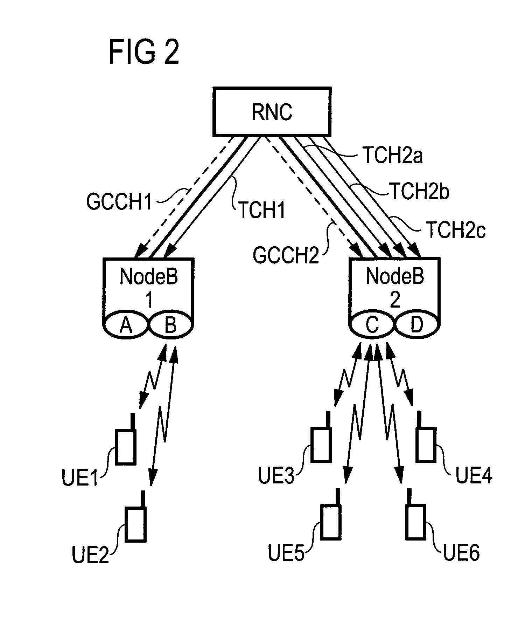

Fig. 2 zeigt eine schematische Darstellung der erfindungsgemäßen Übertragung zwischen einer Funknetzwerkkontrolleinrichtung RNC, zwei Basisstionen NodeBl und NodeB2 und mobilen Teilnehmerstationen UE1, UE2, UE3, UE4, UE5 und UE6.

Die Funknetzwerkkontrolleinrichtung RNC ist mit den zwei Basisstionen NodeB1 und NodeB2 verbunden. Basisstion NodeB1 bedient die Funkzellen A und B und Basisstionen NodeB2 die Funkzellen C und D. In der Funkzelle B befinden sich die Teilnehmerstationen UE1 und UE2. Die Teilnehmerstationen UE3, UE4, UE5 und UE6 gehören zur Funkzelle C.

In der Funkzelle B wird ein MBMS-Dienst, der über den Gruppenkontrollkanal GCCH1 von der Funknetzwerkkontrolleinrichtung RNC über die Funkzelle B der Basisstion NodeB1 über die Funkkommunikations-Schnittstelle signalisiert und über den Verkehrskanal TCH1 übertragen wird, von der mobilen Teilnehmerstation UE1 empfangen. Teilnehmerstation UE2 empfängt keinen MBMS-Dienst.

In der Funkzelle C werden drei MBMS-Dienste, die über den Gruppenkontrollkanal GCCH2 von der Funknetzwerkkontrolleinrichtung RNC über die Funkzelle C der Basisstion NodeB2 über die Funkkommunikations-Schnittstelle signalisiert und über die Verkehrskanäle TCH2a, TCH2b und TCH2c übertragen wird, von den mobilen Teilnehmerstation UE3, UE4 und UE6 empfangen. Die Teilnehmerstation UE3 empfängt die über den Verkehrskanäle TCH2a und TCH2c übertragenen Dienste. Die Teilnehmerstation UE4 empfängt den über den Verkehrskanal TCH2b übertragenen Dienst. Die Teilnehmerstation UE6 empfängt den über den Verkehrskanal TCH2c übertragenen Dienst. Teilnehmerstation UE5 empfängt keinen MBMS-Dienst.

## Patentansprüche

1. Verfahren zur Übertragung von Nutzinformationen als Dienst an mehrere Teilnehmerstationen in einem Funkkommunikationssystem mit mindestens einer Basisstation (NodeBl, NodeB2) und Teilnehmerstationen (UE1 ... UE6),
welche über eine Funkkommunikations-Schnittstelle miteinander verbunden sind,
**dadurch gekennzeichnet,**
**dass** die Basisstation (NodeB1, NodeB2) über einen Gruppenkontrollkanal (GCH1, GCH2) an die den mindestens einen Dienst nutzenden Teilnehmerstationen (UE1 ... UE6) Funkressourceninformation zu mindestens einem Verkehrskanal (TCH1, TCH2a, TCH2b, TCH2c) signalisiert, über welchen die Nutzinformationen des mindestens einen Dienstes an die Teilnehmerstationen übertragen werden.

2. Verfahren nach Anspruch 1,
**dadurch gekennzeichnet,**
**dass** die Basisstation Information, welche die Identifikation des mindestens einen Dienstes betrifft, über den Gruppenkontrollkanal übermittelt.

3. Verfahren nach Anspruch 1 oder 2,
**dadurch gekennzeichnet,**
**dass** die Basisstation Information, welche die Startzeit der Übertragung des mindestens einen Dienstes in dem mindestens einen Verkehrskanal betrifft, über den Gruppenkontrollkanal übermittelt.

4. Verfahren nach einem der Ansprüche 1 bis 3,
**dadurch gekennzeichnet,**
**dass** die Basisstation Information, welche die Übertragungsdauer des Dienstes in dem mindestens einen Verkehrskanal betrifft, über den Gruppenkontrollkanal übermittelt.

5. Verfahren nach einem.der Ansprüche 1 bis 4,
**dadurch gekennzeichnet,**
**dass** die Basisstation Information, welche die Periodizität der Übertragung des Dienstes in dem mindestens einen Verkehrskanal betrifft, über den Gruppenkontrollkanal übermittelt.

6. Verfahren nach einem der Ansprüche 1 bis 5,
**dadurch gekennzeichnet,**
**dass** die Basisstation kontinuierlich Information über den Gruppenkontrollkanal übermittelt.

7. Verfahren nach einem der Ansprüche 1 bis 5,
**dadurch gekennzeichnet,**
**dass** die Basisstation nur zeitweise Information über den Gruppenkontrollkanal übermittelt.

8. Verfahren nach Anspruch 7,
**dadurch gekennzeichnet,**
**dass** die Basisstation Information, welche den Zeitpunkt der nächsten Übertragung zu mindestens einem Dienst im Gruppenkontrollkanal betrifft, über den Gruppenkontrollkanal übermittelt.

9. Verfahren nach einem der Ansprüche 1 bis 8,
**dadurch gekennzeichnet,**
**dass** die über den Gruppenkontrollkanal übermittelten Informationen in einem Ressourcen-Zuweisungs-Schema innerhalb eines Funkrahmens übertragen werden.

10. Verfahren nach einem der Ansprüche 1 bis 9,
**dadurch gekennzeichnet,**
**dass** verschiedene Dienste auf separate Verkehrskanäle abgebildet werden.

11. Verfahren nach einem der Ansprüche 1 bis 10,
**dadurch gekennzeichnet,**
**dass** verschiedene Dienste auf einem oder mehreren Verkehrskanälen zeitlich gemultiplext werden.

12. Funkkommunikationssystem zur Übertragung von Nutzinformationen als Dienst an mehrere Teilnehmerstationen umfassend mindestens eine Basisstation (UE1 ... UE6) und mindestens eine Teilnehmerstation (NodeB1, NodeB2), welche über eine Funkkommunikations-Schnittstelle miteinander verbunden sind,
**dadurch gekennzeichnet,**
**dass** Mittel vorhanden sind, um von der Basisstation (NodeB1, NodeB2) über einen Gruppenkontrollkanal (GCH1, GCH2) an die den mindestens einen Dienst nutzenden Teilnehmerstationen (UE1 ... UE6) Funkressourceninformation zu mindestens einem Verkehrskanal (TCH1, TCH2a, TCH2b, TCH2c) zu signalisieren, über welchen die Nutzinformationen des mindestens einen Dienstes an die Teilnehmerstationen übertragen werden.
